**Europäisches Patentamt**

(19) **European Patent Office**

**Office européen des brevets**

(11) Numéro de publication: **0 127 507**

**B1**

(12) # FASCICULE DE BREVET EUROPÉEN

(45) Date de publication du fascicule du brevet:
08.06.88

(51) Int. Cl.⁴: **B 60 K 41/06**

(21) Numéro de dépôt: **84400872.2**

(22) Date de dépôt: **27.04.84**

(54) Perfectionnements à la commande de changements de rapport dans une transmission automatique à rapport étagés.

(30) Priorité: **02.05.83 FR 8307277**

(43) Date de publication de la demande:
**05.12.84 Bulletin 84/49**

(45) Mention de la délivrance du brevet:
**08.06.88 Bulletin 88/23**

(84) Etats contractants désignés:
**BE DE GB IT NL SE**

(56) Documents cité:
**EP-A-0 000 960**
**EP-A-0 038 083**
**FR-A-2 082 311**
**FR-A-2 299 563**
**FR-A-2 315 641**
**FR-A-2 448 076**

(73) Titulaire: **REGIE NATIONALE DES USINES RENAULT, Boîte postale 103 8-10 avenue Emile Zola, F-92109 Boulogne- Billancourt (FR)**

(72) Inventeur: **Leorat, François, 98 Boulevard de la Reine, F-78000 Versailles (FR)**
Inventeur: **Pannier, Gérard, 5, Allée de l'Aunay Villiers St. Frédéric, F-78640 Neauphle- le- Château (FR)**

(74) Mandataire: **Dossmann, Gérard, Bureau D.A. Casalonga Office Josse & Petit Baaderstrasse 12- 14, D-8000 Munich 5 (DE)**

## Description

L'invention concerne les transmissions automatiques de véhicule à rapports étagés.

Dans la plupart des transmissions automatiques à rapports étagés, les changements de rapport en mode automatique sont décidés en fonction de critères incluant notamment la prise en compte de la vitesse du véhicule et de la charge du moteur. Le plus souvent ces critères sont traduits sous forme de lois de changement de rapport commodément visualisées dans le plan de coordonnées Vv/αc, Vv désignant la vitesse du véhicule et αc l'ouverture de l'organe de régulation de l'admission du combustible au moteur. De manière constante, ces lois sont définies de telle sorte que les changements de rapport s'effectuent à des vitesses du véhicule d'autant plus élevées que la charge du moteur est élevée. D'autre part, de manière constante également, le passage N-1/N, c'est-à-dire en montant d'un rapport inférieur à un rapport supérieur, se fait, pour une même charge du moteur ou plus exactement pour une même ouverture αc, à une vitesse sensiblement supérieure à celle à laquelle a lieu le passage inverse correspondant N/N-1, c'est-à-dire en rétrogradant. Cette disposition, que l'on peut assimiler à un effet d'hystérésis, a pour but d'éviter une tendance inacceptable au pompage entre les rapports N-1 et N qui se manifesterait inévitablement si les passages en montant et en rétrogradant s'effectuaient dans les mêmes conditions de vitesse et de charge.

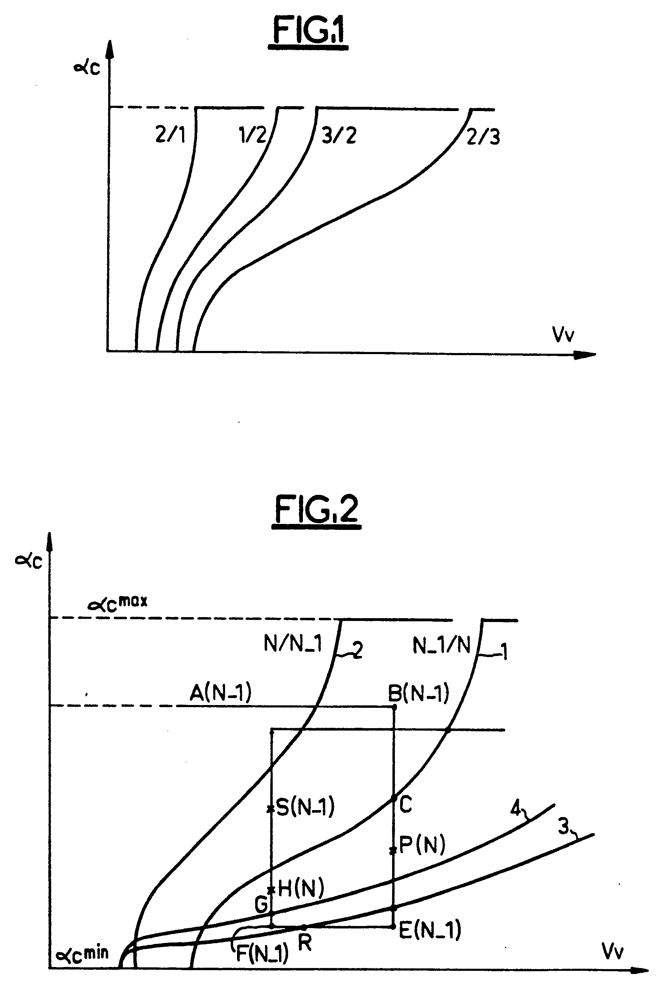

A titre d'exemple, la figure 1 montre un ensemble typique de lois de passage pour une transmission automatique à trois rapports. Le simple examen de ce diagramme montre que les lois de passage correspondantes sont insuffisantes et inadaptées dans certaines configurations pourtant rencontrées de manière très habituelle en conduite automobile. Si par exemple on considère un véhicule en phase d'accélération en seconde avec une position d'accélérateur αc sensiblement constante, sur la fig. 2 cette phase est figurée par un segment orienté tel que AB. Si l'on suppose maintenant qu'au point B le conducteur est contraint de relever subitement le pied de l'accélérateur, cette manoeuvre se traduit sur cette même fig. 2 par le segment de droite BC, sensiblement vertical si le laché d'accélérateur est suffisamment rapide pour que la vitesse du véhicule n'ait pas le temps de chuter. On voit alors que si la trajectoire BC franchit la courbe de passage 2/3, la transmission passe automatiquement en troisième. Or, ce changement de rapport est dans la majorité des cas tout à fait intempestif puisque le frein moteur du véhicule se trouve réduit par le passage en troisième alors que le conducteur manifestait explicitement son intention de ralentir en relevant rapidement le pied. Tous les conducteurs de véhicules équipés de transmission automatique connaissent bien ce comportement typique et le plus souvent s'en plaignent. Le recours manuel aux positions de vitesse imposée permet dans certain cas de remédier partiellement à ce défaut, mais d'une part il ne s'agit par définition pas d'une intervention automatique du système de contrôle de la transmission, et d'autre part, dans des circonstances d'urgence le conducteur n'a pas le temps matériel de recourir aux positions imposées.

On connait également, d'apres le document EP-A-038 083, des changements de vitesse disposant de plusieurs jeux de telles courbes de passage, avec substitution automatique d'un jeu à un autre en fonction d'un certain nombre de paramètres tels que la derivée de l'ouverture des gaz, mais également la pente et la fonctionnement en palier. Cependant ces dispositifs, complexes et onéreux, conservent la plus grande partie des inconvénients précédents en continuant à autoriser des passages de rapports intempestifs selon les circonstances.

Le but de la présente invention est d'éviter cet inconvénient, c'est-à-dire de supprimer les passages N-1/N intempestifs tels qu'ils viennent d'être décrit, tout en conservant les lois de passage habituelles qui donnent en général satisfaction dans les circonstances normales de conduite, et tout en permettant un retour harmonieux à l'utilisation de ces mêmes lois lorsque les circonstances qui ont motivées leur abandon selon l'invention ont disparu.

L'invention consiste à associer, à chaque paire de courbes de montée et de descente de rapports habituelles, une courbe d'accélération négative située dans sa majeure partie au-dessous des précédentes, et une courbe d'ouverture croissante située légèrement au-dessus de la courbe d'accélération négative, et à n'autoriser la montée vers le rapport supérieur correspondant à cette paire de courbes que si la variation d'ouverture se stabilise, soit dans le sens décroissant entre la courbe de montée et la courbe d'accélération négative, soit dans le sens croissant entre la courbe d'ouverture croissante et la courbe de montée.

D'autres particularités de l'invention apparaîtront dans la description qui va suivre d'un mode de réalisation pris comme exemple et représenté sur le dessin annexé, sur lequel:

la fig. 1 représente l'état de la technique, c'est-à-dire les courbes de passage habituelles dans le sens montant et dans le sens descendant pour une boîte à trois rapports;

la fig. 2 représente les courbes caractéristiques pour la mise en oeuvre de l'invention et pour un des passages; et

la fig. 3 représente le schéma d'un mode de mise en oeuvre particulier de l'invention.

Sur la fig. 1 on a porté en abscisse d'une manière habituelle la vitesse Vv du véhicule et en ordonnée l'angle d'ouverture αc du papillon des gaz ou d'un organe similaire. On distingue successivement de gauche à droite la courbe 2/1 de rétrogradation en première, la courbe 1/2 de montée en seconde, la courbe 3/2 de rétrogradation en seconde et la courbe 2/3 de

montée en troisième, en supposant que la boîte comporte trois rapports, ce qui est tout à fait habituel dans le cas d'une boîte automatique associée à un convertisseur de couple.

D'une manière plus générale et pour une transmission comportant un nombre de rapports supérieur à trois, on a représenté sur la fig. 2 la courbe 1 de montée d'un rapport N-1 au rapport N, et la courbe 2 de descente ou de rétrogradation du rapport N vers le rapport N-1. Ces courbes sont obtenues par une technologie connue, hydraulique, électromécanique, électronique ou microinformatique.

Par une même technologie, on impose selon l'invention une loi supplémentaire qui se traduit par le tracé d'une courbe dite d'accélération négative 3 et d'une courbe d'ouverture croissante 4. La courbe 3 d'accélération négative est définie de manière non limitative par le fait que tout point figuratif du plan de coordonnées situé en dessous de cette courbe 3 correspond à une accélération négative du véhicule sur le rapport N, et que par conséquent tout point figuratif situé au-dessus de cette courbe correspond à une accélération positive sur ce même rapport. Le cas échéant, cette courbe doit être déformée vers les faibles vitesses de telle manière que la zone d'accélération négative englobe le pied de la courbe 2 de descente.

La courbe d'ouverture croissante 4 est définie à partir de la courbe 3 par le fait qu'elle doit se trouver au-dessus de cette dernière et à une distance réduite mais suffisante pour éviter les phénomènes de pompage comme on le verra plus loin. A titre d'exemple non limitatif, la courbe 4 peut être déduite de la courbe 3 par une simple affinité de rapport légèrement supérieur à 1 par rapport à l'axe des vitesses Vv, l'identité éventuelle des courbes 3 et 4 étant obtenue pour la valeur 1 du rapport d'affinité.

Si l'on considère le véhicule dans une phase d'accélération sur le rapport N-1 figuré par le segment AB, et qu'en B le conducteur lève subitement le pied de l'accélérateur, la trajectoire figurative de la manoeuvre dans le plan de coordonnées coupe la courbe 1 en C. Le franchissement de la courbe de montée 1 est alors mémorisée, mais le changement N-1/N, qui devrait normalement avoir lieu, se trouve selon l'invention inhibé tant que l'accélérateur n'a pas atteint une position stable, c'est-à-dire tant que αc n'a pas conservé une valeur constante pendant un temps donné. Si l'accélérateur atteint une position stable P située entre la courbe de montée 1 et la courbe d'accélération négative 3, le passage N-1/N est alors autorisé, et le véhicule conserve après ce passage une accélération positive sur le rapport N. Si au contraire, la position stable E atteinte par l'accélérateur est située sous la courbe d'accélération négative 3, l'interdiction du passage N-1/N se trouve confirmée et le véhicule reste sur le rapport N-1.

Cette procédure se traduit par le fait que:
- si le conducteur souhaite simplement modérer l'accélération de son véhicule, il relève modérément le pied jusqu'au point P, et il n'y a pas de raison d'empêcher le passage au rapport N qui permet au véhicule de conserver une accélération modérée sur ce rapport;
- si au contraire le conducteur souhaite interrompre l'accélération de son véhicule, il relève fortement le pied jusqu'au point E, et il convient alors de conserver un frein moteur suffisant en empêchant le passage au rapport supérieur qui se serait normalement produit après le franchissement de la courbe 1.

A partir d'une situation telle que celle figurée par le point E sur le rapport N-1, on suppose qu'après une phase de décélération EF le conducteur réaccélère à partir du point F. Le franchissement de la courbe 3 en R ne doit en aucun cas provoquer le passage sur le raport N. C'est au contraire la courbe d'ouverture croissante 4 qui délimite la frontière de la suppression de l'inhibition du passage N-1/N, le décalage entre les courbes 3 et 4 introduisant un effet d'hystérésis similaire dans son principe à celui introduit par le décalage des courbes de montée et de descente 1 et 2.

Si après avoir franchi la courbe 4 en G le point figuratif du fonctionnement se stabilise en H, figurant une position de l'accélérateur correspondant à la zone comprise entre la courbe d'ouverture croissante 4 et la courbe de montée 1, le passage sur le rapport supérieur N est autorisé. Si au contraire le point figuratif du fonctionnement se stabilise en S figurant une position de l'accélérateur correspondant à la totalité de la zone située au-dessus de la courbe de montée N-1/N, le véhicule reste sur le rapport inférieur N-1 tant que le point figuratif ne franchit pas à nouveau la courbe de montée 1 de la loi usuelle.

Cette procédure de retour à la loi de passage normale traduit le fait que:
- si le conducteur, sur le rapport N-1, réaccélère trop peu pour que le véhicule puisse retrouver une accélération positive sur le rapport N, l'inhibition est maintenue et le véhicule reste sur le rapport N-1;
- si le conducteur, sur le rapport N-1, réaccélère modérément mais suffisamment pour que le véhicule puisse retrouver une accélération positive sur le rapport N, il n'y a pas lieu de différer le passage N-1/N. L'hystérésis introduite par le décalage des courbes 3 et 4 évite tout risque de pompage entre les rapports N-1 et N;
- si au contraire le conducteur réaccélère suffisamment fort pour que le point figuratif du fonctionnement du véhicule soit tel, conformément aux lois normales de passage, que ce point correspond à un fonctionnement sur le rapport N-1, on laisse alors jouer les lois de passage normales, et le passage N-1/N n'est autorisé qu'en franchissement normal de la courbe N-1/N par le point figuratif.

Pour résumer ce qui précède, on peut dire que l'invention ajoute aux lois de passage usuelles, et au dispositif correspondant, des lois d'inhibition et un dispositif d'inhibition correspondant qui n'autorisent le passage de montée vers un rapport supérieur (N-1/N) que:

. si la valeur de l'ouverture se stabilise, c'est-à-dire cesse de varier pendant un temps donné,

. et si la configuration correspondante dans le plan Vv/αc se trouve

- dans le sens décroissant des ouvertures entre la courbe de montée 1 et la courbe d'accélération négative 3, ou

- dans le sens croissant des ouvertures entre la courbe d'ouverture croissante 4 et la courbe de montée 1.

Comme mentionné plus haut, les technologies usuelles de réalisation des lois de passage normales permettent facilement l'adaptation de ces lois et de ce dispositif supplémentaires.

A titre d'exemple non limitatif, on va montrer l'adaptation de l'invention à une technologie particulière qui est celle décrite dans les brevets français n° 1 397 442 déposé le 19 mars 1964, avec ses additions 88 608 et 90 581, le brevet 1 520 662 déposé le 8 février 1967, et notamment le brevet 2 076 715 déposé le 26 janvier 1970.

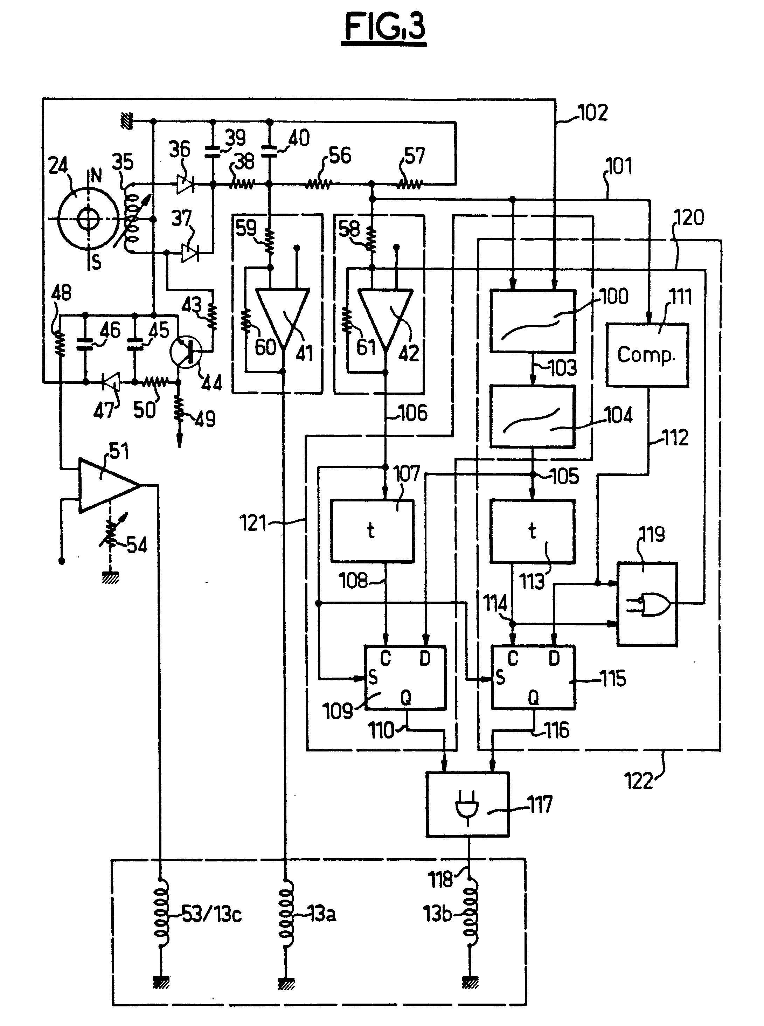

La fig. 3 de la présente demande reprend d'ailleurs la fig. 4 de ce brevet 2 076 715 en y rajoutant simplement les éléments permettant la mise en oeuvre de l'invention telle qu'elle vient d'être définie.

Pour simplifier l'exposé, les organes remplissant les mêmes fonctions et communs à la fig. 3 de la présente demande et à la fig. 4 du brevet susmentionné conservent la même numérotation à deux chiffres, tandis que les éléments complémentaires permettant la mise en oeuvre de l'invention sont repérés par des numéros à trois chiffres.

La commande du deuxième ou du troisième rapport de transmission est faite normalement par l'intermédiaire d'une électrovanne 13b. La logique de fonctionnement du dispositif est telle que la présence de courant dans l'électrovanne 13b correspond à la deuxième vitesse, alors que l'absence de courant correspond à la troisième vitesse. L'électrovanne 13b est commandée par le fil 118 de sortie de la porte amplificatrice de puissance 117 qui assure d'une part la combinaison logique des états de la loi 121 de contrôle des changements du deuxième au troisième rapport et de la loi 122 de contrôle des changements du troisième au deuxième rapport, et d'autre part l'amplification en puissances des signaux logiques en provenance des deux voies de contrôle 121 et 122 pour assurer l'alimentation correcte de l'électrovanne 13b.

Les organes communs aux deux voies 121 et 122 sont constitués par les blocs fonctionnels 100 et 104 qui génèrent la courbe 3 de la fig. 2 de limite d'accélération positive du véhicule nécessaire au blocage sur le deuxième rapport lorsque le conducteur lève le pied de la pédale d'accélération et la courbe 4 de la fig. 2, affine de la courbe 3 et qui délimite la frontière de suppression ou de maintien du blocage du deuxième rapport lors des ouvertures croissantes, c'est-à-dire lorsque le conducteur enfonce la pédale d'accélérateur.

Le circuit mélangeur 100 génère, à partir de la tension image combinée de la charge moteur αc et de la vitesse du véhicule Vv présente sur le fil 101 et de la tension image seule de la vitesse du véhicule Vv présente sur le fil 102, une tension transposée présente sur le fil 103 et combinant différemment les paramètres vitesse du véhicule Vv et charge du moteur αc, de telle sorte que la comparaison de sa valeur à un seuil fixe à travers le comparateur de tension à hystérésis 104 génère dans l'espace αc/Vv les courbes 3 et 4 de la fig. 2. La tension du fil 101 est fournie par la double bobine 35 du gouverneur comparateur au point commun des résistances 56 et 57 du pont diviseur après redressement par les diodes 36, 37 et filtrage par la cellule constituée des condensateurs 39, 40 et de la résistance 38. La tension du fil 102 est fournie par le convertisseur constitué par les éléments de 43 à 50 qui transforme les variations de fréquence de la double bobine 35 liées à la vitesse du véhicule en variation de tension aux bornes de la résistance 48.

L'ensemble 121 est constitué d'une bascule de mémorisation 109 dont la sortie Q prend et conserve l'état de l'entrée D de lecture uniquement lorsque l'entrée C de commande change d'état en passant du niveau logique 0 au niveau logique 1. L'entrée D est reliée au fil 105 de sortie du comparateur à seuil fixe 104 dont l'état est représentatif de la position du point de fonctionnement (αc/Vv) du véhicule par rapport aux courbes 3 et 4 dans l'espace défini par la fig. 2. L'état logique du fil 105 est 0 lorsque le point de fonctionnement se situe à gauche de la courbe 4 et 1 lorsque le point de fonctionnement est à droite de la courbe 3. Dans la zone d'hystérésis comprise entre les deux courbes 3 et 4, le fil 105 peut prendre les états 0 ou 1 suivant le sens de déplacement du point de fonctionnement. Il conserve le niveau 0 lorsque la courbe 4 est coupée de gauche à droite et cela jusqu'à la courbe 3, et inversement conserve le niveau 1 lorsque la courbe 3 est coupée de droite à gauche jusqu'à la courbe 4. L'entrée C de la bascule 109 est reliée au fil 108 de sortie du bloc de temporisation 107 qui est chargé de retarder l'apparition du signal de changement de deuxième en troisième vitesse.

L'ensemble 122 est constitué d'une bascule de mémorisation 115 de même principe que 109. L'entrée D de la bascule 115 est reliée au fil 112 de sortie du comparateur à seuil fixe et à hystérésis pratiquement nulle 111 qui compare la tension image combinée de la charge moteur αc et de la vitesse du véhicule Vv à un seuil fixe, et dont l'état de sortie est représentatif de la position du point de fonctionnement du véhicule par rapport à la courbe 1 dans l'espace défini par la fig. 2. Le niveau logique du fil 112 est 1 lorsque le point de fonctionnement se situe à gauche de la courbe 1 et 0 lorsque le point de fonctionnement est à sa droite. L'entrée C de la bascule 115 est reliée au fil 114 de sortie du bloc

de temporisation 113 de même principe que 107 qui est chargé de retarder l'apparition du signal indicatif de croisement de droite à gauche de la courbe 4 de la fig. 2 par le point de fonctionnement du véhicule.

Les deux entrées S de remise à l'état 1 des sorties des bascules 109 et 115 sont reliées au fil 105 et permettent de remettre à l'état initial les bascules 109 et 115, et par cela même d'envoyer du courant dans l'électrovanne 13b par l'intermédiaire de la porte de puissance 117 correspondant au deuxième rapport de transmission, lorsque le point de fonctionnement du véhicule se situe à gauche de la courbe 2 de la fig. 2 et que l'ensemble comparateur 42, 58, 61 porte le fil 106 au niveau 1.

Enfin, la porte 119 qui reçoit par le fil 112 le signal de sortie du comparateur 111, et par le fil 114 le signal de sortie du bloc de temporisation 113, et qui est relié par le fil 120 au point commun des résistances 58, 61 et de l'une des entrées de l'amplificateur 42, permet de replacer la sortie 106 de l'amplificateur 42 dans l'état correspondant au deuxième rapport de transmission pour certaines combinaisons logiques de l'état des fils 112 et 114 qui seront exposées plus loin.

Si l'on considère d'abord le véhicule dans une phase d'accélération sur le deuxième rapport, représentée par le segment AB de la fig. 2, la sortie du comparateur constituée par l'amplificateur 42 et par les résistances 58 et 61 se trouve au niveau logique 1 et impose par le fil 106 qui arrive sur les entrées S des bascules 109 et 115 le maintien des sorties Q des bascules 109 et 115 au niveau 1. Les fils 110 et 116 acheminent ces niveaux 1 aux deux entrées de la porte de puissance 117 qui dans ces conditions alimente en courant par le fil 118 l'électrovanne 13b et impose la deuxième vitesse. Dans ce cas également, les circuits mélangeur 100 et comparateur 104 qui contrôlent la position du point de fonctionnement par rapport aux courbes 3 et 4 de la fig. 2, fournissent sur le fil 105 un signal à l'état 0.

Au point B de la fig. 2, le conducteur lève le pied de la pédale d'accélérateur. Lorsque le point de fonctionnement du véhicule coupe la courbe 1 en C, le fil 106 de sortie du comparateur constitué de l'amplificateur 42 et des résistances 58 et 61 change d'état logique et passe rapidement du niveau 1 au niveau 0. Au bout d'un temps généré par le bloc de temporisation 107, le fil 108 voit son niveau passer rapidement de 0 à 1. Ce changement d'état du fil 108 commande la lecture et le maintien par la sortie Q du niveau logique présent sur l'entrée D de la bascule de mémorisation 109. Deux cas peuvent alors se produire:

- soit le conducteur lève doucement le pied de l'accélérateur ou déplace peu la pédale de telle sorte que le point de fonctionnement arrive par exemple au point P de la fig. 2 en n'ayant pas eu le temps de croiser la courbe 3 générée par les circuit mélangeur 100 et comparateur 104. Dans ce cas, le fil 105 relié à la sortie du comparateur 104 et à l'entrée B de la bascule 109 reste au niveau logique 0; à l'arrivée de l'ordre de commande sur l'entrée C de la bascule 109, la sortie Q change d'état et le fil 110 amène un niveau logique 0 à la porte de puissance 117 qui coupe par le fil 118 l'alimentation de l'électrovanne 13b et provoque le passage du troisième rapport de transmission;

- soit le conducteur lève rapidement le pied et déplace beaucoup la pédale d'accélérateur de telle sorte que le point de fonctionnement arrive par exemple au point B et a eu le temps de croiser la courbe 3. Dans ces conditions, le fil 105 relié à la sortie du circuit comparateur 104 est passé du niveau logique 0 au niveau 1 au moment où le point de fonctionnement a coupé la courbe 3, et cela avant le changement d'état du fil 108. L'arrivée de l'ordre de commande sur l'entrée C maintient la sortie Q de la bascule 109 à l'état 1. Le changement d'état du fil 105 est également transmis au bloc de temporisation 113 qui dans ces conditions n'introduit aucun retard. La sortie de 113 reliée par le fil 114 à l'entrée C de commande de la bascule 115, qui passe rapidement du niveau 1 vers le niveau 0 pratiquement en même temps que l'entrée 213 monte de 0 à 1, n'a pas d'effet sur le bascule 115, active seulement lorsque son entrée C passe du niveau 0 vers 1. La sortie Q de 115 reliée au fil 116 reste donc au niveau 1. Les deux fils 110 et 116 acheminent donc toujours les deux niveaux 1 aux entrées de la porte de puissance 117 qui continue d'alimenter en courant l'électrovanne 13b et maintient le deuxième rapport de transmission.

On revient maintenant au premier cas précédemment exposé où le point de fonctionnement du véhicule est arrivé seulement au point P au bout de la temporisation produite par le bloc 107, et où la transmission est passée sur le troisième rapport. Cette situation correspond au fonctionnement normalement connu des boîtes de vitesses automatiques, et la voie de contrôle 122, qui n'agit que pour supprimer l'action de blocage en deuxième de la voie de contrôle 121 par le fil 116, n'a pas d'effet sur la porte de puissance 117, et donc pas d'effet sur l'état de l'électrovanne 13b tant que l'entrée est reliée au fil 110 de sortie de la voie de contrôle 121 restée au niveau 0. Cet état subsiste jusqu'à l'instant où, le point de fonctionnement passant de la droite à la gauche de la courbe 2 de la fig. 2, le niveau logique du fil de sortie 106 du comparateur constitué de l'amplificateur 42 et des deux résistances 58 et 61 remonte rapidement du niveau 0 au niveau 1. Ce changement d'état de l'entrée S relié au fil 106, en remettant la sortie Q de la bascule 106 à 1 porte le fil 110, la sortie de la porte de puissance 117 et le fil 118 au niveau 1 correspondant à l'engagement du deuxième rapport de transmission par l'alimentation de l'électrovanne 13b.

Dans le second cas précédemment exposé, le point de fonctionnement du véhicule est arrivé au point E de la fig. 2 à l'issue de la temporisation produite par le bloc 107; par le fil 110 de sortie du bloc de contrôle 121 et par le fil 116 de sortie du bloc de contrôle 122, qui sont restés au niveau 1, la transmission a conservé la deuxième vitesse. Après une phase de décélération représentée par le segment EF de la fig. 2, où le croisement en R de la courbe 3 est sans effet, le conducteur réappuie sur la pédale d'accélérateur. Au point G qui correspond au croisement de droite à gauche de la courbe 4, la sortie reliée au fil 105 des circuit mélangeur 100 et comparateur 104 passe rapidement du niveau logique 1 vers le niveau 0. Au bout d'un temps généré par le bloc de temporisation 113, qui peut être réglé différent ou égal au retard produit par l'autre bloc de temporisation 107, le fil 114 voit son niveau passer rapidement de 0 à 1. Ce changement d'état du fil 114 commande la lecture et le maintien par la sortie Q du niveau logique présent sur l'entrée B de la bascule de mémorisation 115. Deux cas peuvent alors se produire:

- soit le conducteur enfonce doucement l'accélérateur ou déplace peu la pédale, de telle sorte que le point de fonctionnement arrive par exemple au point H de la fig. 2 sans croiser la courbe 1 générée par le comparateur 111. Dans ce cas, le fil 112 relié à la sortie du comparateur 111 et à l'entrée D de la bascule 115 reste au niveau logique 0 et, à l'ordre de commande sur l'entrée C de la bascule 115, la sortie Q change d'état et le fil 116 amène un niveau logique 0 à la porte de puissance 117 qui coupe, par le fil 118, l'alimentation de l'électrovanne 13b et provoque le passage du troisième rapport de transmission;

- soit le conducteur enfonce rapidement l'accélérateur et déplace beaucoup la pédale de telle sorte que le point de fonctionnement arrive par exemple au point S en ayant eu le temps de croiser la courbe 1. Dans ces conditions, le fil 112 relié à la sortie du circuit comparateur 111 est passé du niveau logique 0 au niveau 1 au moment où le point de fonctionnement a coupé la courbe 1, et cela avant le changement d'état du fil 114. L'arrivée de l'ordre de commande sur l'entrée C maintient la sortie Q de la bascule 115 et le fil 116 à l'état 1. Les deux fils 110 et 116 acheminent donc toujours les deux niveaux 1 aux entrées de la porte de puissance 117 qui continue d'alimenter en courant l'électrovanne 13b et maintient le deuxième rapport de transmission.

C'est le circuit constitué de la porte 119 qui est chargé de replacer le comparateur constitué de l'amplificateur 42 et des résistances 58 et 61 dans l'état correspondant au deuxième rapport de transmission pour permettre le fonctionnement normal du pilotage électronique avec prise éventuelle du troisième rapport lorsque le point de fonctionnement recroisera la courbe 1. La porte 119 est chargée de faire baisser transitoirement, en appliquant par le fil 120 un niveau 0 au point commun des résistances 58, 61 et de l'une des entrées de l'amplificateur 42, seulement lorsque le fil 112 est à l'état 1 et que le fil 114 est à l'état 0. Cette configuration, qui fait basculer à l'état 1 la sortie reliée au fil 106 de l'amplificateur 42 correspondant à la position du point de fonctionnement se situant à gauche de la courbe 1, n'existe que transitoirement puisqu'elle cesse au bout du temps généré par le bloc de temporisation 113, uniquement lors d'une confirmation du maintien du deuxième rapport après un blocage provoqué par un levé de pied, puis un réenfoncement violent de la pédale d'accélération.

Naturellement, l'homme de l'art pourra sans difficulté adapter l'invention à n'importe qu'elle autre technologie que la technologie électronique qui vient d'être décrite, en particulier à la technologie microinformatique décrite en référence au brevet français 2 480 000.

## Revendications

1. Transmission automatique à rapports étagés pour véhicule, du type dans lequel un gouverneur, réalisé selon une technologie appropriée telle qu'hydraulique, électromécanique, électronique ou microinformatique, génère pour chaque transition entre deux rapports successifs (N-1;N), une courbe de montée (1) et une courbe de descente (2) du rapport de transmission dans le plan de coordonnées vitesse véhicule (Vv)/ouverture papillon ($\alpha$c), et produit soit le passage vers le rapport supérieur (N) lorsque le point représentatif de fonctionnement franchit par vitesse (Vv) croissante et/ou par ouverture ($\alpha$c) décroissante la courbe de montée (1), soit le passage vers le rapport inférieur (N-1) lorsque le point représentatif franchit dans le sens des vitesses (Vv) décroissantes et/ou des ouvertures ($\alpha$c) croissantes, la courbe de descente (2), avec, pour chaque ou au moins pour une transtion, un dispositif (121, 122, 117) d'inhibition des passages intempestifs vers le rapport supérieur, dispositif réalisé de préférence avec la même technologie et agencé, connecté ou programmé de telle manière que

- d'une part, il génère une courbe dite d'accélération négative (3) telle que tout point représentatif situé au-dessus de cette courbe (3) corresponde à une accélération positive du véhicule sur le rapport supérieur (N), située dans sa majeure partie au-dessous des courbes de montée (1) et de descente (2), et une courbe d'ouverture croissante (4) située légèrement au-dessous de la courbe d'accélération négative (3), et

- d'autre part il n'autorise la montée vers le rapport supérieur (N) que si la valeur de l'ouverture ($\alpha$c) se stabilise, c'est-à-dire cesse de varier pendant un temps minimum, et si le point représentatif (Vv, $\alpha$c) correspondant dans le plan des vitesses de véhicule (Vv) et des ouvertures ($\alpha$c) se trouve soit entre la courbe de montée (1) et la courbe d'accélération négative (3) si

l'ouverture (αc) vient de varier dans le sens décroissant, soit entre la courbe d'ouverture croissante (4) et la courbe de montée (1) si l'ouverture (αc) vient de varier dans le sens croissant.

2. Transmission selon la revendication 1, caractérisée par le fait que la courbe d'accélération négative (3) est déformée aux basses vitesses pour englober le pied de la courbe de descente (2).

3. Transmission selon la revendication 2, caractérisée par le fait que la courbe d'ouverture croissante (4) est définie comme courbe affine de la courbe d'accélération négative (3) par rapport à l'axe des vitesses (Vv) et dans un rapport légèrement supérieur à l'unité.

**Patentansprüche**

1. Automatisches Fahrzeug-Stufengetriebe eines Typs, bei dem ein in geeigneter Technologie, wie z. B. Hydraulik, Elektromechanik, Elektronik oder Mikroprozessortechnik ausgeführter Regler für jeden Übergang zwischen zwei aufeinanderfolgenden Schaltstufen (N-1; N) in der Koordinatenebene Fahrzeuggeschwindigkeit $(v_v)$/Klappenöffnung $(\alpha_c)$ eine Anstiegskurve (1) und eine Abfallskurve (2) des Übersetzungsverhältnisses erzeugt und entweder in den nächsthöheren Gang (N) schaltet, sobald der typische Betriebspunkt bei steigender Geschwindigkeit $(v_v)$ und/oder bei kleiner werdender Klappenöffnung $(\alpha_c)$ durch die Anstiegskurve, oder in den nächstniedereren Gang (N-1) schaltet, sobald der typische Betriebspunkt bei abnehmenden Geschwindigkeiten $(v_v)$ und/oder größer werdender Klappenöffnung $(\alpha_c)$ durch die abfallende Kurve geht, mit einer Vorrichtung (121, 122, 117) für jeden oder wenigstens für einen Durchgang, die ungewollte Übergänge zum nächsthöheren Gang verhindert, wobei diese Vorrichtung vorzugsweise in der gleichen Technologie ausgeführt und angetrieben oder angeschlossen bzw. programmiert ist, so daß sie
- einerseits eine Kurve sogenannter negativer Beschleunigung (3) erzeugt, so daß jeder typische Betriebspunkt, der oberhalb dieser Kurve (3) liegt, einer postiven Beschleunigung des Fahrzeugs zum nächsthöheren Gang (N) entspricht, und wobei diese Kurve zum größten Teil unterhalb der Anstiegs- (1) bzw. Abfallskurve (2) liegt, und eine Kurve der sich vergrößernden Klappenöffnung (4) erzeugt, die etwas oberhalb der Kurve der negativen Beschleunigung (3) liegt, und - andererseits diese Vorrichtung den Übergang zum nächsthöheren Gang (N) nur dann zuläßt, wenn die Größe der Klappenöffnung $(\alpha_c)$ stabil wird, d. h. sich während einer Minimalzeit nicht mehr verändert, und wenn der typische Betriebspunkt $(v_v, \alpha_c)$ in der Ebene der Fahrzeuggeschwindigkeit $(v_v)$ und der Öffnung $(\alpha_c)$ entweder zwischen der Anstiegskurve (1) und der Kurve der negativen Beschleunigung (3) liegt, wenn sich die Klappenöffnung $(\alpha_c)$ in Richtung des Kleinerwerdens verändert, oder zwischen der Kurve der größerwerdenden Klappenöffnung (4) und der Anstiegskurve (1) liegt, wenn sich die Klappenöffnung $(\alpha_c)$ in Richtung des Größerwerdens verändert.

2. Schaltgetriebe gemäß Anspruch 1, dadurch gekennzeichnet, daß die Kurve der negativen Beschleunigung (3) in Richtung kleiner Geschwindigkeiten verformt ist, um das untere Ende der Abfallskurve (2) mit zu umfassen.

3. Schaltgetriebe gemäß Anspruch 2, dadurch gekennzeichnet, daß die Kurve der zunehmenden Klappenöffnung (4) als affine Kurve zur Kurve der negativen Beschleunigung (3) gegenüber der Achse der Geschwindigkeiten $(v_v)$ und in einem Verhältnis, das etwas größer als die Einheit ist, festgelegt wird.

**Claims**

1. Automatic transmission with stepped ratios for vehicles, of the type in which a governor, made according to an appropriate technology such as hydraulic, electro-mechanical, electronic or microprocessing, generates, for each transition between two successive ratios (N-1;N), a changing-up curve (1) and a changing-down curve (2) for the transmission ratio in the plane of coordinates vehicle speed (Vv)/throttle butterfly opening (αc); and produces either the change up to the higher ratio (N) when the representative point of operation passes through the changing up curve (1), by the increasing speed (Vv) and/or by the decreasing opening (αc), or the change down to the lower ratio (N-1) when the representative point passes through the changing-down curve (2) in the direction of decreasing speeds (Vv) and/or of increasing openings (αc), with, for each or at least one transition, an inhibition device (121, 122, 117) for ill-timed changes up to the higher ratio, this device made preferably with the same technology and arranged, connected or programmed in such a manner that:
- on the one hand it generates a curve called negative acceleration (3) such that any representative point lying above this curve (3) corresponds to a positive acceleration of the vehicle in the higher ratio (N), lying for the most part below the changingup (1) and changing-down (2) curves, and an increasing opening curve (4) located slightly above the negative acceleration curve (3), and
- on the other hand it only authorizes the changing up to the higher ratio (N) if the value of the opening (αc) stabilizes, that is to say ceases to vary over a minimum period, and if the corresponding representative point (Vv, αc) in the plane of vehicle speeds (Vv) and of openings (αc) is either between the changing-up curve (1) and the negative acceleration curve (3) if the opening ($\alpha_c$) has just varied in the decreasing direction, or between the increasing opening curve (4) and the changing-up curve (1) if the opening ($\alpha c$) has just varied in the increasing direction.

2. Transmission according to Claim 1, characterized in that the negative acceleration curve (3) is distorted at low speeds to encompass the bottom of the changing down curve (2).

3. Transmission according to Claim 2, characterized in that the increasing opening curve (4) is defined as the defined curve of the negative acceleration curve (3) in relation to the axis of the speeds (Vv) and in a ratio slightly greater than one.

# FIG.1

# FIG.2

# FIG.3